# EUROPEAN PATENT SPECIFICATION

(11) **EP 1 291 687 B1**
(45) Date of publication and mention of the grant of the patent: **27.07.2011**
(21) Application number: 02008063.6
(22) Date of filing: 11.04.2002
(51) Int. Cl.: G02B 6/25, G02B 6/26, B24B 13/04, B24B 19/22, B23B 27/06

(54) **Fiber end surface processing method**
Endflächenbehandlungsverfahren für eine optische Kunststofffaser
Méthode de traitement de surface de sortie pour fibre optique plastique

(30) Priority: 07.09.2001 JP 2001271765; 02.10.2001 JP 2001306179; 05.12.2001 JP 2001371465; 28.12.2001 JP 2001400897
(43) Date of publication of application: 12.03.2003
(73) Proprietor: NHK SALES COMPANY LIMITED, TOKYO (JP)
(72) Inventor: Iijima, Yoshimi, c/o NHK Sales Company Ltd., Koto-ku, Tokyo (JP); Kizukuri, Hiroshi, Hanamigawa-ku, Chiba-shi, Chiba-ken (JP)
(74) Representative: Panten, Kirsten

(56) References cited:
- EP-A- 0 874 257
- EP-A- 1 020 744
- DE-A- 3 405 211
- DE-A- 19 751 213
- DE-U- 29 914 825
- US-A- 3 857 305
- US-A- 5 841 921
- US-A- 5 919 013
- PATENT ABSTRACTS OF JAPAN vol. 0102, no. 23 (P-483), 5 August 1986 (1986-08-05) & JP 61 059303 A (MITSUBISHI RAYON CO LTD), 26 March 1986 (1986-03-26)
- PATENT ABSTRACTS OF JAPAN vol. 0081, no. 21 (P-278), 7 June 1984 (1984-06-07) & JP 59 026701 A (MITSUBISHI RAYON KK), 13 February 1984 (1984-02-13)

## Description

### BACKGROUND OF THE INVENTION

### 1. Field of the Invention

The present invention relates to a plastic optical fiber end surface processing method for processing an end surface of a plastic optical fiber (hereinafter simply referred to as an "optical fiber") into, for example, a convex or concave semi-spherical surface.

### 2. Description of the Related Art

In processing an optical fiber end surface into a semi-spherical surface, it has conventionally been common practice to perform end surface processing by applying heat. For example, there is a method in which an optical fiber is held in a vertical position while heating its forward end by a high temperature heat source, such as flame, so as to turn it into liquid, shaping the end surface into a convex spherical configuration by surface tension thereof. The method, however, has a problem in that the heating is rather uneven, so that the convex spherical configuration lacks reproducibility, and further it will incur flaws, adhesion of dirt, and the like.

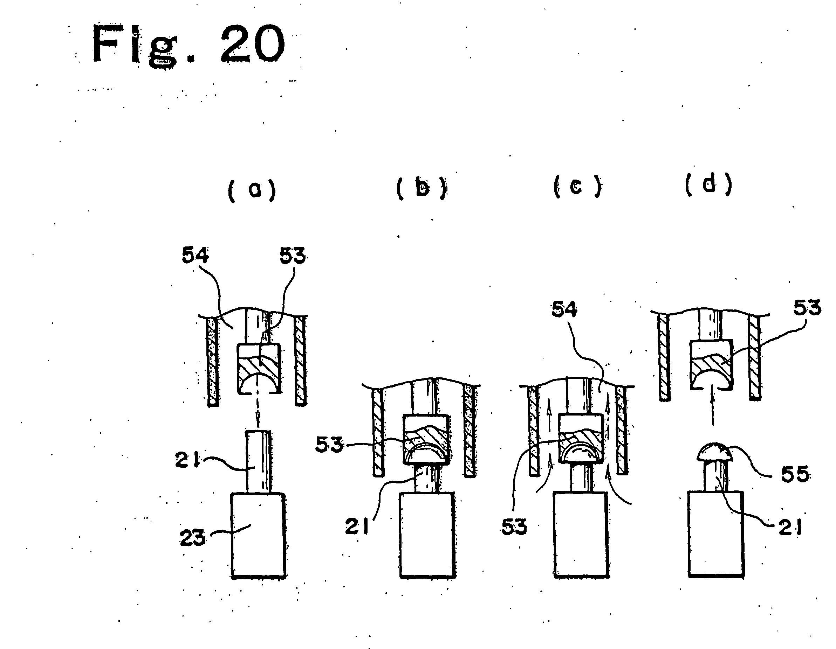

As means for solving such problems, there has been provided, as shown in Figs. 20A, 20B, 20C, and 20D, an optical fiber end surface processing apparatus including: a securing member (not shown) for securing in position an optical fiber 21 whose end portion is exposed by a predetermined length; a lens forming mold 53 adapted to be heated at least when pressed against the tip of the end portion of the optical fiber 21; a rapid cooling means 54 which is integrated and moved with the lens forming mold 53 and adapted to forcibly cool the end portion of the optical fiber 21, with the lens forming mold 53 pressed against the tip of the optical fiber end portion or after separating the lens forming mold 53 from the end portion of the optical fiber; and a conveying means (not shown) for relatively pressing the lens forming mold 53 and the rapid cooling means 54 against the tip of the optical fiber end portion and separating them therefrom.

In this optical fiber end surface processing apparatus, the optical fiber 21, whose end portion is exposed and which has a jacket 23, is secured in position by the securing member (not shown) (Fig. 20A); the lens forming mold 53 and the rapid cooling means 54 are pressed against the forward end of the optical fiber 21 by the conveying means (not shown) and heated to partially soften and melt the end portion into a lens configuration (Fig. 20B); the end portion of the optical fiber 21 is forcibly cooled by the rapid cooling means 53 (Fig. 20C); and the lens forming mold 53 and the rapid cooling means 54 are separated from the forward end of the optical fiber 21 (Fig. 20D), thus obtaining an optical fiber with a lens 55.

This apparatus is preferable in that it enables a lens (a semi-spherical surface) to be formed at the tip of an optical fiber end portion easily and efficiently at low cost, making it possible to form a convex shape with satisfactory reproducibility without incurring any considerable flaws, adhesion of dirt, and the like.

However, while suitable for the formation of a convex semi-spherical surface, the above-described conventional optical fiber end surface processing apparatus, which adopts heating, is not applicable to the formation of other shapes including a concave semi-spherical surface.

EP-A 0 874 257 discloses an optical fiber end surface processing method with a cutter, a holder for the optical fiber and diamant-type detach cutting means for treating an optical fiber end surface.

DE 299 14 825 discloses a device and a method for cutting cables with a cutter with a blade-like shape which is mounted in a holder and a plastic optical fiber held in a through-hole of the holder.

### SUMMARY OF THE INVENTION

In view of this, it is a first object of the present invention to provide an optical fiber end surface processing method with which it is possible to form not only a convex semi-spherical surface but also surfaces of arbitrary configurations including a concave semi-spherical surface and a flat surface.

An optical fiber includes a core portion at the center, a cladding portion in the periphery thereof, and a jacket covering the same, the core portion being formed of plastic as an optical fiber. Thus, while it is capable of forming a core portion end surface into a semi-spherical surface (lens) configuration, the above-described conventional optical fiber end surface processing apparatus using heat cannot process end surfaces of the cladding portion and the jacket. However, depending upon the mode of use of the optical fiber, there may be also a case in which processing of end surfaces of the cladding portion and the jacket is desired.

In view of this, it is a second object of the present invention to provide an optical fiber end surface processing method with which it is possible to selectively perform end surface processing not only on the core portion of the optical fiber but also on the cladding portion and the jacket.

As described above, the conventional optical fiber end surface processing method utilizes heating. In contrast, it is a third object of the present invention to provide a novel optical fiber end surface processing method in which, instead of using heating as described above, a cutter (cutting tool) is used for the cutting processing of an optical fiber end surface.

To attain the above objects, an optical fiber end surface processing method according to the present invention is characterized by including cutting at least a core portion of an optical fiber end surface into a semi-spherical surface by a semi-circular cutter.

Specifically, the optical fiber end surface processing method is characterized by including: inserting a cutter halfway through into a through-hole of a holder from one side and rotating the cutter; inserting an optical fiber into the through-hole from the other side; and cutting at least a core portion of an optical fiber end surface into a semi-spherical surface within the through-hole of the holder by the cutter.

The semi-circular cutter has one of convex and concave semi-circular configurations, and the optical fiber end surface is cut into one of convex and concave semi-spherical surfaces by this cutter. More specifically, in an optical fiber end surface processing apparatus including a motor, a cutter connected to a driving shaft of the motor directly or through the intermediation of a connection member, and a holder having a through-hole into which the cutter is inserted halfway through, an optical fiber is inserted into the through-hole of the holder from one end thereof, and at least a core portion of an optical fiber end surface is cut by the cutter that rotates.

### BRIEF DESCRIPTION OF THE DRAWINGS

In the accompanying drawings:
Fig. 1 is an enlarged front view of an optical fiber end surface processing cutter for use in an optical fiber end surface processing method of the present invention;
Fig. 2 is an enlarged main-portion perspective view of an optical fiber end surface processing cutter for use in the optical fiber end surface processing method of the present invention;
Figs. 3A and 3B are enlarged sectional views showing examples of a plastic optical fiber end surface processing configuration;
Fig. 4 is an explanatory front view of another optical fiber end surface processing cutter for use in the optical fiber end surface processing method of the present invention;
Fig. 5 is an explanatory plan view of another optical fiber end surface processing cutter for use in the optical fiber end surface processing method of the present invention;
Fig. 6 is a perspective view of another optical fiber end surface processing cutter for use in the optical fiber end surface processing method of the present invention;
Fig. 7 is a perspective view of the cutter of Fig. 6 as seen from the opposite side;
Fig. 8 is an explanatory front view of still another optical fiber end surface processing cutter for use in the optical fiber end surface processing method of the present invention;
Fig. 9 is an explanatory plan view of still another optical fiber end surface processing cutter for use in the optical fiber end surface processing method of the present invention;
Fig. 10 is a perspective view of still another optical fiber end surface processing cutter for use in the optical fiber end surface processing method of the present invention;
Fig. 11 is an enlarged perspective view of a holder;
Figs. 12A and 12B are enlarged sectional views showing how a holder is used;
Fig. 13 is an explanatory sectional view of an optical fiber end surface processing apparatus for use in the optical fiber end surface processing method of the present invention;
Fig. 14 is an explanatory plan view of a multiple plastic optical fiber end surface processing apparatus for use in the optical fiber end surface processing method of the present invention;
Fig. 15 is an explanatory front view of a multiple plastic optical fiber end surface processing apparatus for use in the optical fiber end surface processing method of the present invention;
Fig. 16 is an explanatory enlarged main-portion partial sectional view of a multiple plastic optical fiber end surface processing apparatus for use in the optical fiber end surface processing method of the present invention;
Fig. 17 is an explanatory sectional view showing how a cutter is mounted to a holder;
Fig. 18 is an explanatory sectional view showing how a holder is mounted to a rotation shaft;
Fig. 19 is an explanatory sectional view showing how a cutter is mounted to a rotation shaft; and
Figs. 20A, 20B, 20C, and 20D are explanatory sectional views showing a conventional example in the order of process.

### DETAILED DESCRIPTION OF THE PREFERRED EMBODIMENTS

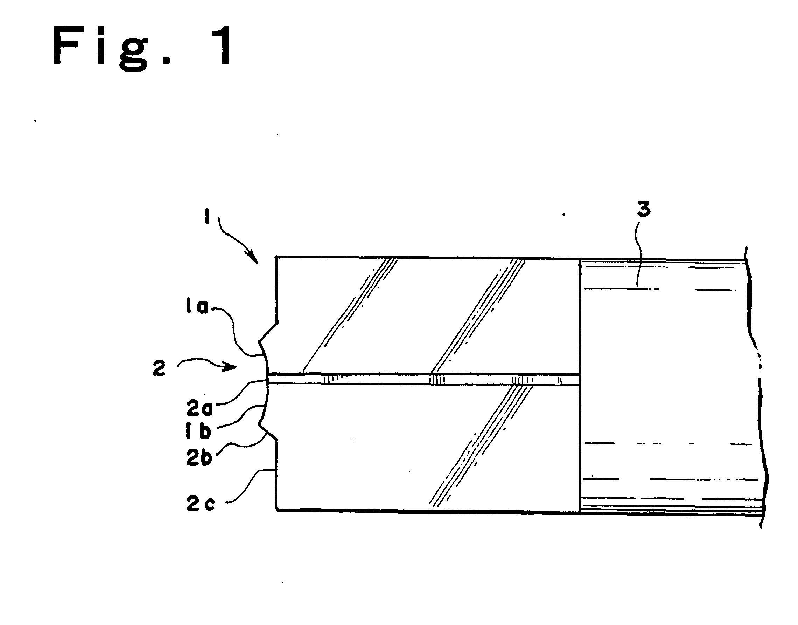

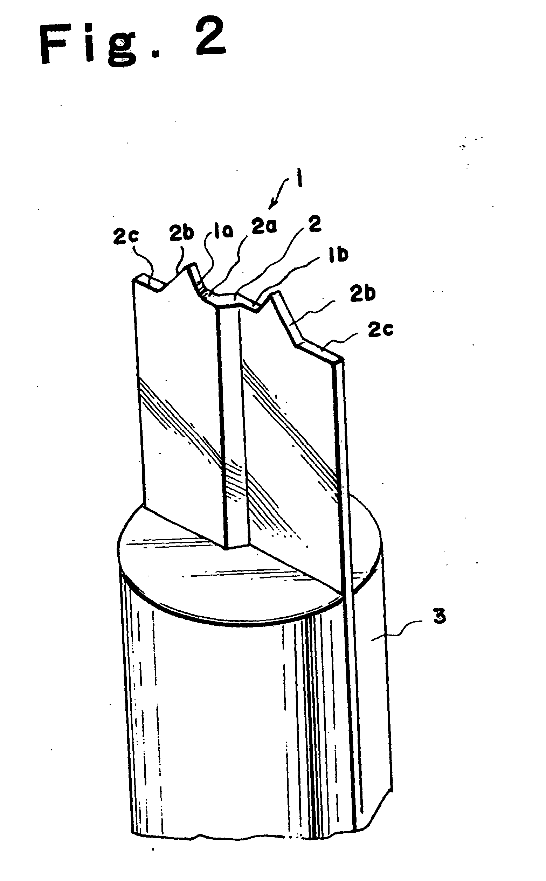

In the following, embodiments of the present invention will be described in detail with reference to the drawings. Fig. 1 is an enlarged front view of an optical fiber end surface processing cutter for use in an optical fiber end surface processing method of the present invention; and Fig. 2 is an enlarged main-portion perspective view of the same.

In the drawings, a cutter 1 is provided at the forward end of a shaft portion (a body portion) 3; in this embodiment, it consists of two cutters 1a and 1b and formed in a convex semi-circular configuration. More specifically, as shown in Figs. 1 and 2, the cutting edge 2 of the cutter 1 is a recess 2a whose central portion is semi-circular, and inclined portions 2b are connected thereto, and further, vertical portions 2c are connected thereto.

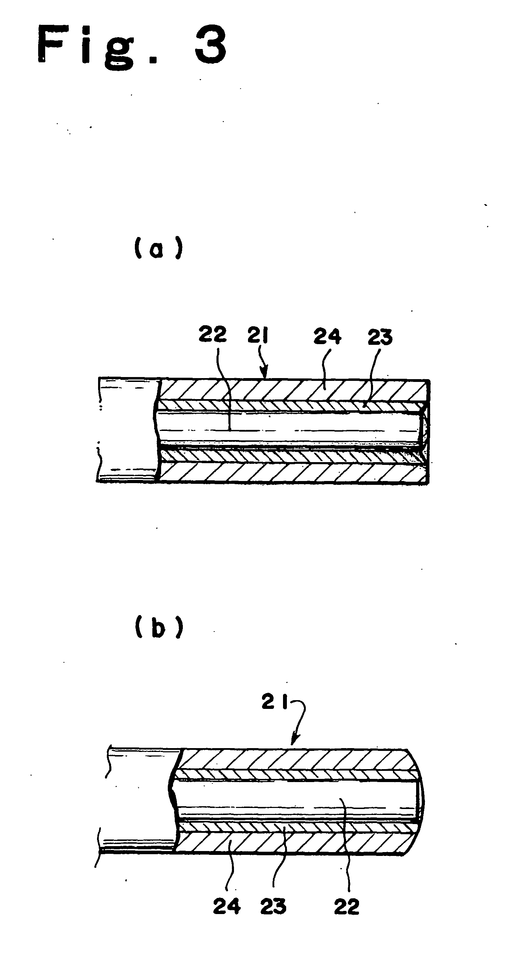

The cutter 1 is rotated, and an end surface of an optical fiber is opposed to and brought into contact with the cutter 1 thus rotated to thereby effect cutting, thus performing processing on the optical fiber end surface. In this case, the configuration of the optical fiber end surface corresponds to the configuration of the cutter 1, and exhibits an end surface configuration as shown in Fig. 3A. In the drawing, reference numeral 21 indicates a plastic optical fiber, reference numeral 22 indicates a core portion, reference numeral 23 indicates a cladding portion, and reference numeral 24 indicates a jacket. Thus, the cutter 1 of this embodiment processes solely the end surface of the core portion 22 at the center into a semi-spherical (lens-like) configuration, and the cladding portion 23 exhibits an inclined (tapered) surface, the jacket 24 exhibiting a flat surface.

When, for example, the cutting edge 2 of the cutter 1 has a concave semi-spherical configuration, the entire end surface of the optical fiber 21, including not only the core portion 22 but also the cladding portion 23 and the jacket 24, is of a convex semi-spherical configuration, as shown in Fig. 3B.

As can be understood from the above description, by changing the configuration of the cutter 1, the cutting configuration of the optical fiber end surface can be changed arbitrarily. Thus, it will be understood that the optical fiber end surface can be formed into a flat surface or a concave semi-spherical surface.

While in this embodiment the cutter 1 is composed of two cutters 1a and 1b as shown in Fig. 2, it is also possible for the cutter to be composed of one or three or more cutters.

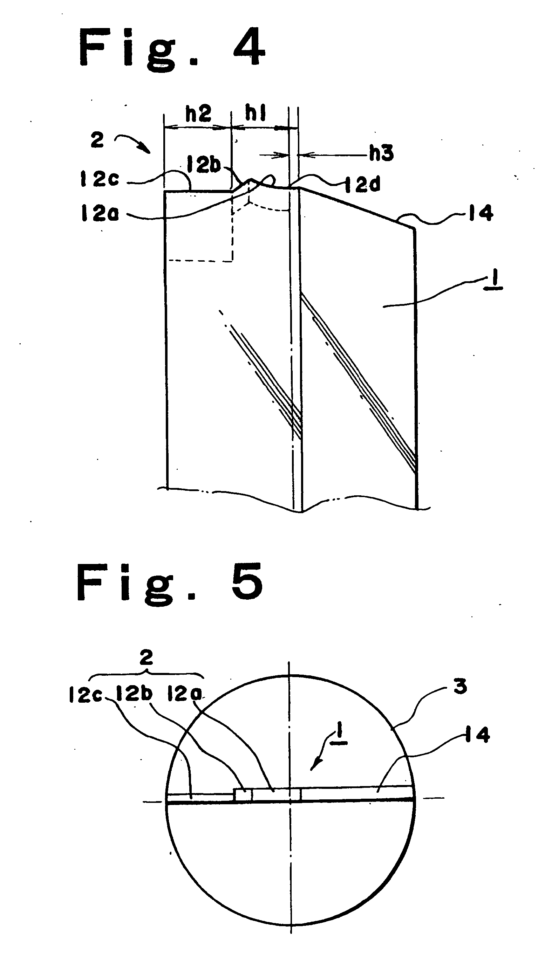

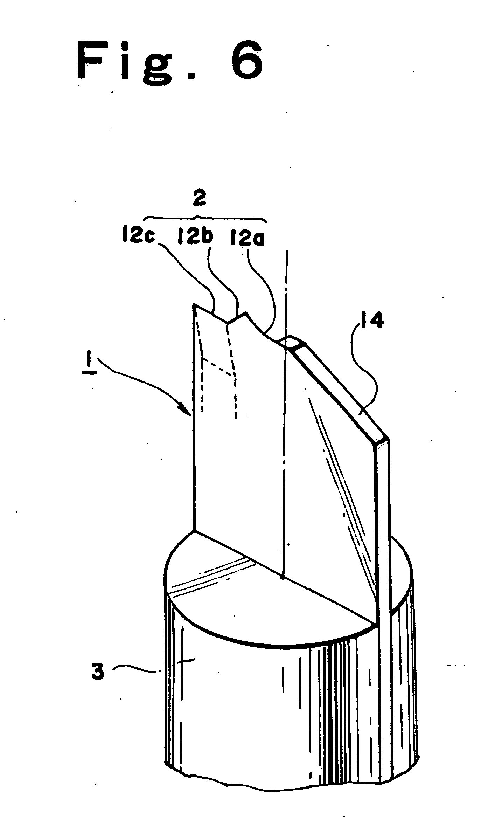

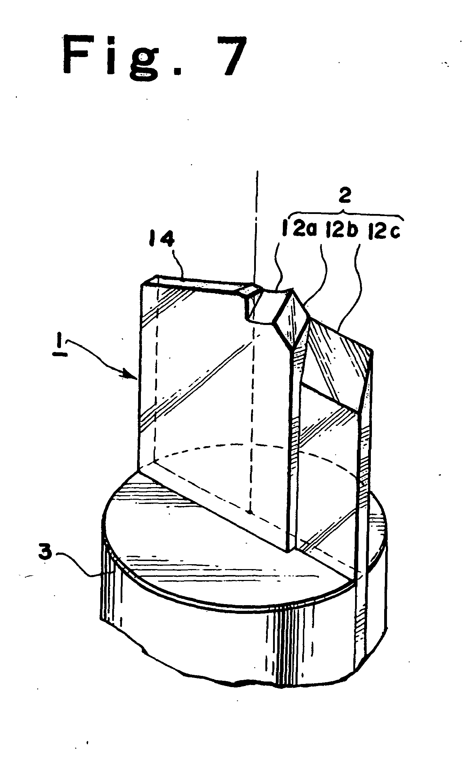

Fig. 4 is an explanatory front view of another cutter for use in the optical fiber end surface processing method of the present invention; Fig. 5 is an explanatory plan view of another cutter for use in the optical fiber end surface processing method of the present invention; Fig. 6 is a perspective view of another cutter for use in the optical fiber end surface processing method of the present invention; and Fig. 7 is a perspective view of the cutter of Fig. 6 as seen from the opposite side.

The cutter 1 is equipped with a shaft portion 3 (see Figs. 6 and 7) which is to be mounted to an optical fiber end surface processing apparatus described below for use in the optical fiber end surface processing method. The cutting edge 2 of the cutter 1 is only provided so as to constitute one half with respect to the center thereof, the other half being formed as an inclined surface 14 with no cutting function. When cutting an optical fiber end surface, the inclined surface 14 serves as a clearance so that it may not come into contact with the optical fiber end surface.

The cutting edge 2 of the cutter 1 is formed so as to constitute one half with respect to the center thereof as a recess 12a whose central portion is slightly curved; an inclined portion 12b is connected thereto, and further, a horizontal linear portion 12c is connected thereto; in this embodiment, there exists a small flat portion12d at the center. Further, in the cutting edge 2 of the cutter 1, there is a difference in cutting edge angle between the portion consisting of the recess 12a and the inclined portion 12b (the range h1 in Fig. 4) and the portion consisting of the horizontal linear portion 12c (the range h2 in Fig. 4) (see Fig. 7). In this embodiment, the portion consisting of the horizontal linear portion 12c (h2) is more acute than the portion consisting of the recess 12a and the inclined portion 12b (h1).

As shown in Figs. 3A and 3B, the optical fiber 21 is usually composed of the core portion 22, the cladding portion 23, and the jacket 24.

Thus, when an end surface of the optical fiber 21 as described above is rotated at the cutter 1 for cutting, an end surface configuration corresponding to the configuration of the cutter 1 is obtained as shown in Fig. 3A. That is, solely the end surface of the core portion 22 at the center is cut into a semi-spherical (lens-like) configuration, the end surface of the cladding portion 23 being inclined (tapered) and that of the jacket 24 flat. Of course, the length of the recess 12a of the cutter 1 corresponds to the radius of the core portion 22, the width of the inclined portion 12b corresponds to the thickness of the cladding portion 23, and the width of the horizontal linear portion 12c corresponds to the thickness of the jacket 24.

The cutting edge 2 of the cutter 1 is formed such that there is a difference in cutting edge angle between the portion consisting of the recess 12a and the inclined portion 12b (h1) and the portion consisting of the horizontal linear portion 12c (h2), so that if the core portion 22, the cladding portion 23, and the jacket 24 are formed of different materials, it is possible to perform cutting with the cutting edge 2 exhibiting cutting edge angles suitable for the respective materials. Therefore, it is possible to realize a desirable cutting. Thus, if end surface processing is performed with a connector attached to the terminal of the optical fiber 21, it is possible to perform cutting in a satisfactory manner.

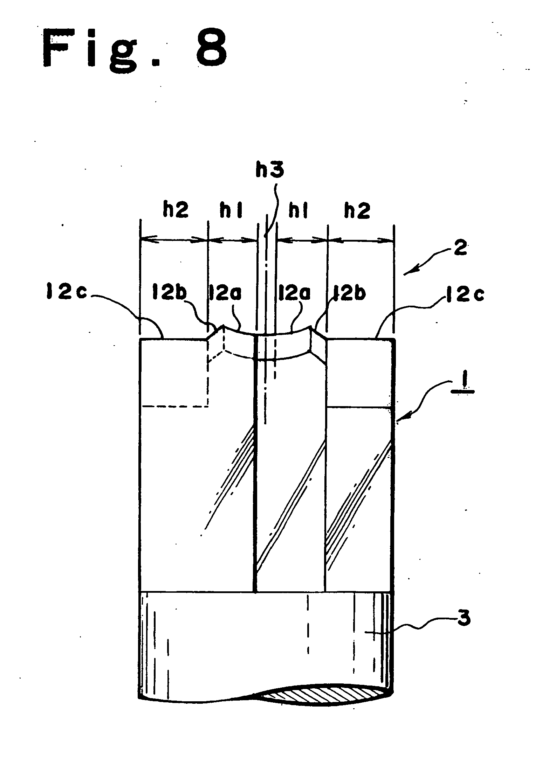

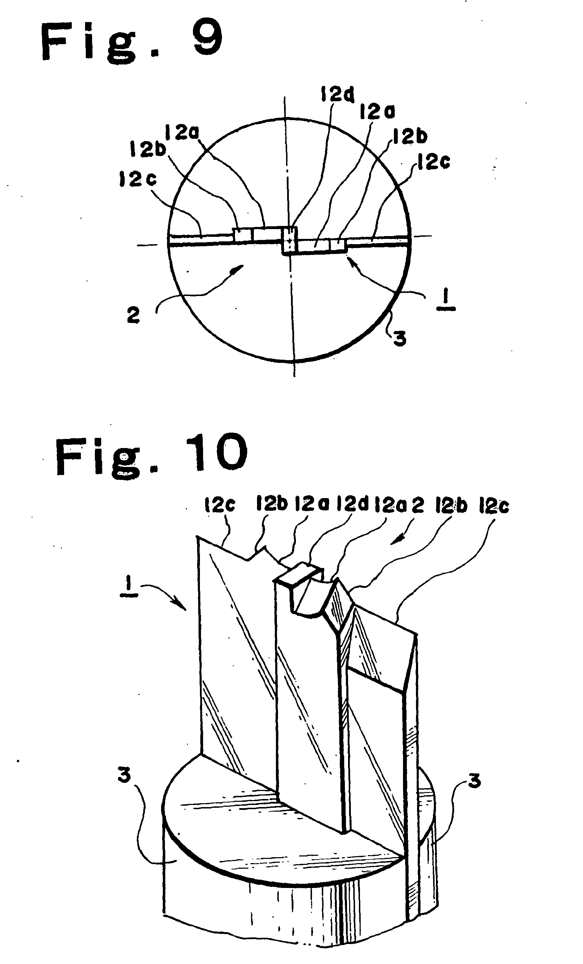

Figs. 8 through 10 show still another cutter for use in the optical fiber end surface processing method of the present invention, of which Fig. 8 is an explanatory front view thereof, Fig. 9 is an explanatory plan view thereof, and Fig. 10 is a perspective view thereof.

In this embodiment, the total length of the cutter 1 (the length of the cutting edge) substantially corresponds to the diameter of the optical fiber, and the cutting edge 2 is formed in a symmetrical configuration with respect to the center, one half of the cutting edge with respect to the center exhibiting a difference in cutting edge angle between the portion thereof nearer to the center and the outer portion thereof. The configuration of the portion of the cutting edge 2 constituting one half with respect to the center is the same as that of the above-described embodiment, so that the components that are the same as those of the above embodiment are indicated by the same reference numerals, and a detailed description thereof will be omitted.

The configuration and the cutting edge angle of the cutter 1 are not restricted to those described above. For example, when the cutting edge 2 of the cutter 1 is of a concave semi-circular configuration, the entire end surface of the optical fiber 21, including not only the core portion 22 but also the cladding portion 23 and the jacket 24, is of a convex semi-spherical configuration, as shown in Fig. 3B. When the cutter 1 is of a convex semi-circular configuration, the optical fiber end surface is of a concave semi-spherical configuration. In either case, the cutter 1 is in conformity with the construction of the optical fiber 21, and the cutting edge portions of the cutter 1 corresponding to the optical fiber portions of different materials exhibit different angles, whereby it is possible to perform an optimum cutting.

As described above, in the plastic optical fiber end surface processing method of the present invention, the optical fiber end surface is cut into a semi-spherical surface by the cutter 1. Actually, however, the optical fiber is thin and flexible, so that the optical fiber end surface cannot be cut simply by holding it opposed to and bringing it into contact with the rotating cutter 1.

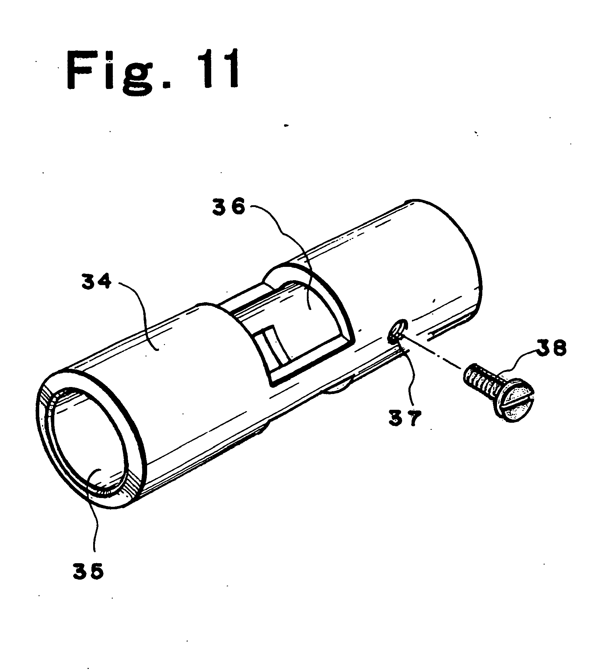

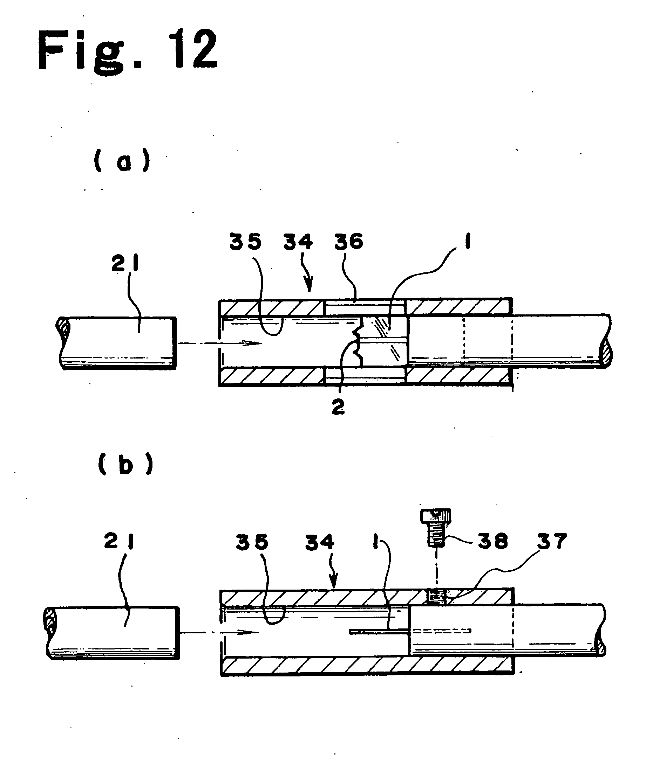

In view of this, cutting is actually performed by using a holder 34 as shown in Fig. 11. The holder 34 is formed as a shaft with a through-hole 35, having a window 36 open at some midpoint and a screw 37. As shown in Figs. 12A and 12B, the cutter 1 is inserted from one side into the through-hole 35 of the holder 34 to a position corresponding to the window 36, and rotated. Then the optical fiber 21 is inserted from the other side to bring its end surface into contact with the rotating cutter 1, whereby cutting is effected inside the through-hole 35 of the holder 34. At this time, cuttings (chips) are discharged from the window 36. By thus performing cutting inside the through-hole 35 of the holder 34, the optical fiber 21 is free from positional deviation, and the axes of the optical fiber 21 and the cutter 1 are matched with each other, whereby a desirable semi-spherical surface formation is possible.

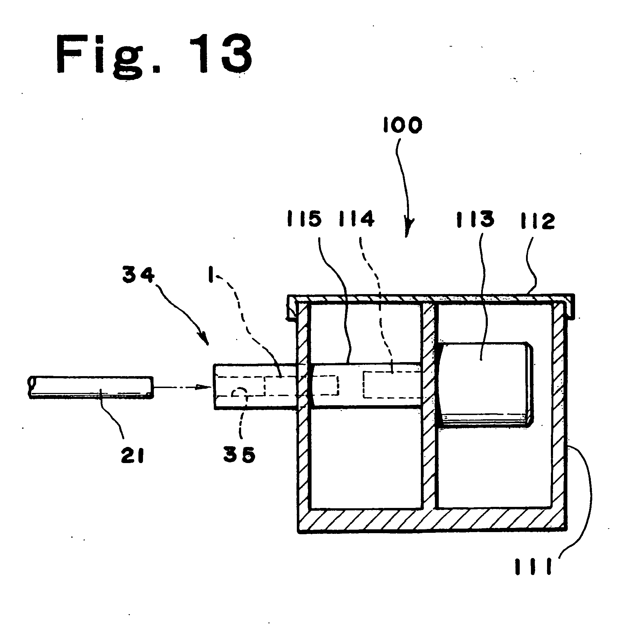

More specifically, a plastic optical fiber end surface processing apparatus 100 as shown in Fig. 13 is used. The plastic optical fiber end surface processing apparatus 100 has a casing 111, in which a motor 113 is provided, and in which the cutter 1 is connected to a driving shaft 114 of the motor 113 through the intermediation of a coupling 115. As shown in Fig. 12B, the through-hole 35 of the holder 34 is brought into fit-engagement with the cutter 1, and the holder 34 is fixed to the cutter 1 by a screw 38. Thus, the cutter 1 can be rotated by the motor 113, so that, by inserting the optical fiber 21 into the through-hole 35 of the holder 34 from the other side as described above and bringing it into contact with the rotating cutter 1, it is possible to effect end surface processing. In Fig. 13, numeral 112 indicates a cover of the casing 111.

By cutting the end surface of the optical fiber 21 within the through-hole 35 of the holder 34, the optical fiber 21 is free from positional deviation, and the axes of the optical fiber 21 and the cutter 1 are matched with each other, whereby a desirable end surface processing is possible.

At this time, the portion of the cutter 1 of the present invention nearer to the center and the outer portion thereof differ in the angle of the cutting edge 2, so that cutting can be performed at appropriate cutting edge angles respectively in correspondence with the core portion 22, the cladding portion 23, the jacket 24, and the like, constituting the optical fiber 21, whereby a desirable and accurate end surface cutting is possible.

The above embodiments are applied to a single-core optical fiber; in the case of a multiple optical fiber, a multiple optical fiber end surface processing apparatus is used.

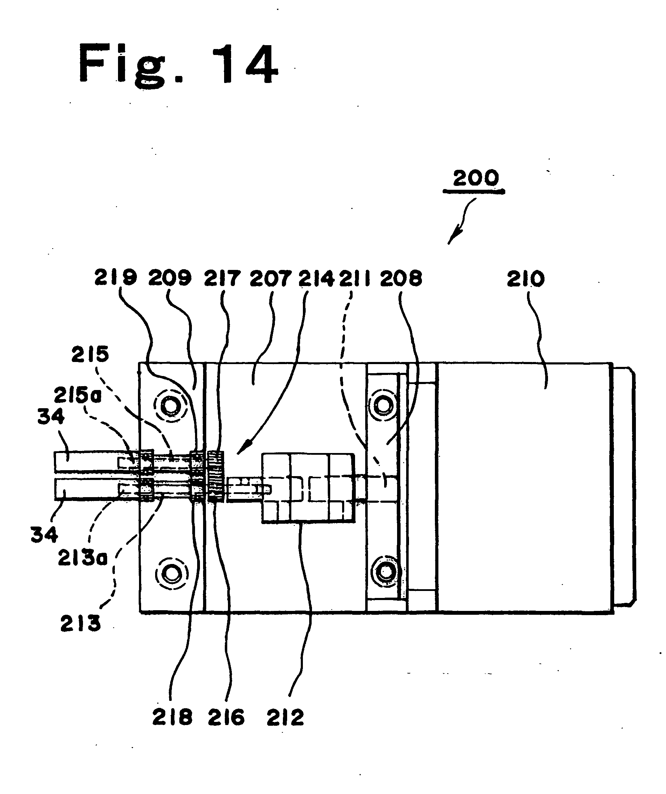

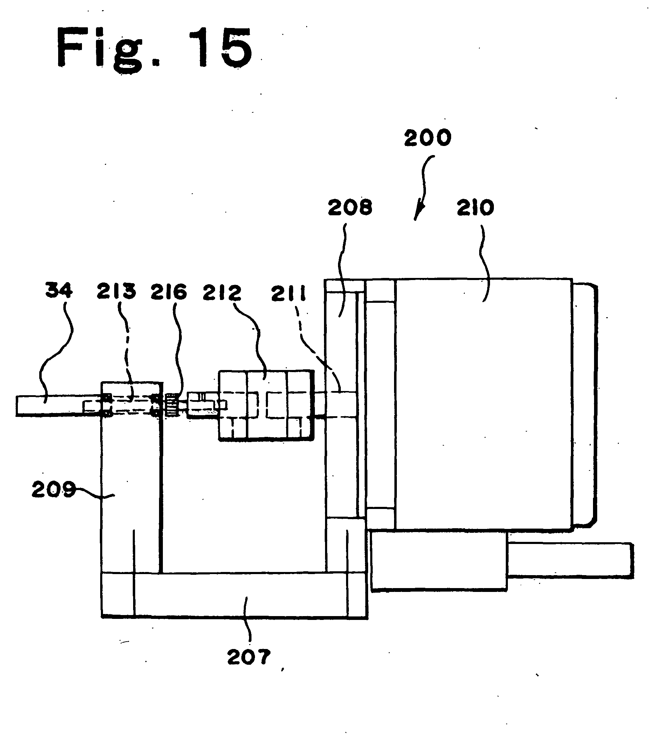

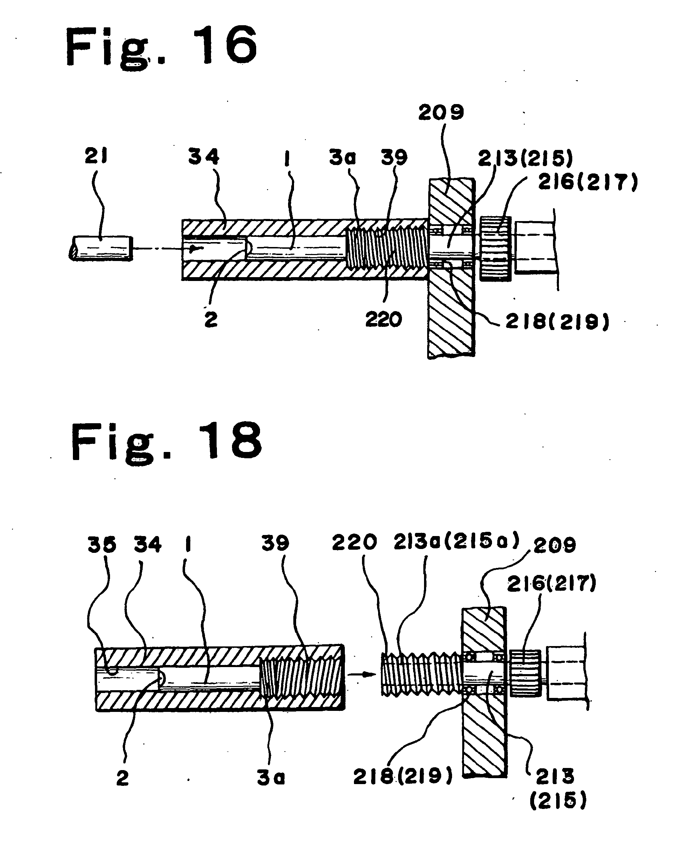

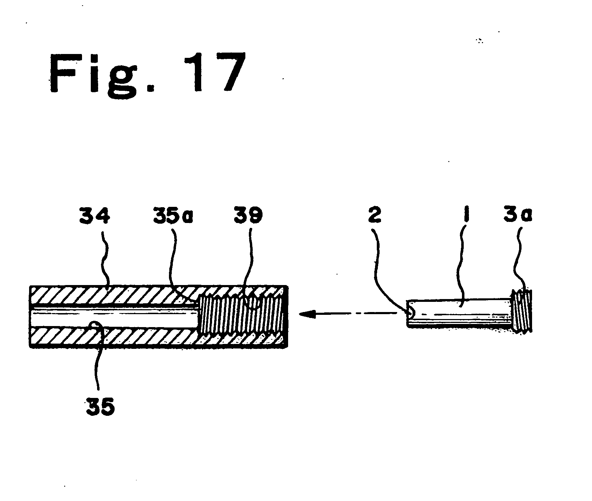

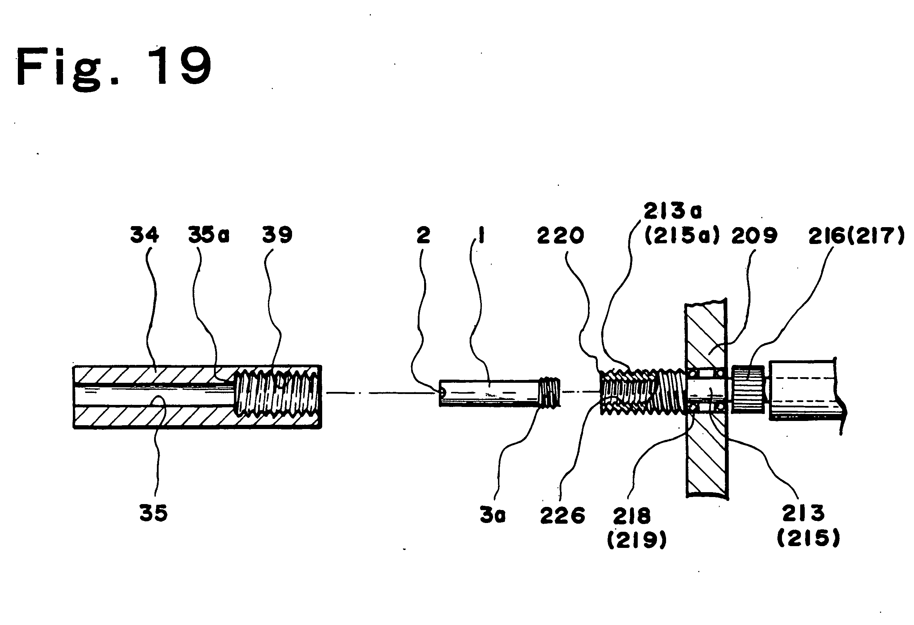

Figs. 14 through 19 show a multiple plastic optical fiber end surface processing apparatus for use in the optical fiber end surface processing method of the present invention, of which Fig. 14 is an explanatory plan view thereof, Fig. 15 is an explanatory front view thereof , Fig. 16 is an explanatory enlargedmain-portion partial sectional view thereof, Fig. 17 is an explanatory sectional view showing how a cutter is mounted to a holder, Fig. 18 is an explanatory sectional view showing how the holder is mounted to a rotation shaft, and Fig. 19 is an explanatory sectional view showing how the cutter is mounted to the rotation shaft.

In the drawings, in a multiple plastic optical fiber end surface processing apparatus 200 for use in the optical fiber end surface processing method of the present invention, there are arranged in parallel a first rotation shaft 213 connected for rotation to a connection member connected to a driving shaft 211 of a motor 210, for example, a coupling 212, and a second rotation shaft 215 connected for rotation to the motor 210 or the first rotation shaft 213 through the intermediation of a transmission mechanism 214. The first and second rotation shafts 213 and 215 have through-holes 35, and the cutters 1 are detachably attached to the through-holes 35. There are arranged in parallel and detachably mounted the holders 34, into the through-holes 35 of which optical fibers are inserted for end surface cutting by the cutters 1.

On a base plate 207, a mounting plate 208 and a bearing plate 209 are provided upright and spaced apart from each other by a predetermined distance, the motor 210 being mounted to the mounting plate and secured thereto. The driving shaft 211 of the motor 210 extends through the mounting plate 208 and protrudes on the bearing plate 209 side; at the protruding portion of the driving shaft 211, the coupling 212, serving as the connection member, is provided.

The first rotation shaft 213 is rotatably borne by a bearing 218 of the bearing plate 209, and provided so as to extend through the bearing plate 209. One end portion thereof is connected to the coupling 212, and the other end portion thereof is connected to the holder 34.

The second rotation shaft 215 is rotatably borne by a bearing 219 of the bearing plate 209, and provided so as to extend through the bearing plate 209. One end portion thereof is firmly attached with a gear 217, and the other end portion thereof is attached with the holder 34. The second rotation shaft 215 and the first rotation shaft 213 are arranged in parallel. The gear 217 of the second rotation shaft 215 is in mesh with a gear 216 firmly attached to the first rotation shaft 213. As a result, when the motor 210 is driven, the first rotation shaft 213 rotates, and the second rotation shaft 215 is also caused to rotate through the transmission mechanism 214 formed by the gears 216 and 217. Of course, the transmission mechanism 214 may consist of some other means, such as a belt.

As shown in Figs. 16 through 18, each holder 34 is in the form of a shaft (short cylinder) having a through-hole 35, and the interior of one end portion of the through-hole 35 is formed as a screw hole 39 with a large diameter. The configuration of the cutting edge of the cutter 1 is as described above; in this embodiment, however, the proximal end of the cutter 1 on the side opposite to the cutting edge 2 is formed as a screw portion 3a with a large diameter. As shown in Fig. 18, the cutter 1 is inserted coaxially into the through-hole 35 of the holder 34, and is mounted thereto by threadedly engaging the screw portion 3a with the screw hole 39 of the holder 34, as shown in Fig. 16. At this time, the fastening is effected until the screw portion 3a with a large diameter engages a step portion 35a of the through-hole 35 of the holder 34.

The protruding portions 213a and 215a of the first and second rotation shafts 213 and 215 are equipped with screws 220, and the holders 34 with the cutters 1 attached thereto are mounted to the first and second rotation shafts 213 and 215 by threadedly engaging the screws 220 with the screw holes 39.

As shown in Fig. 19, it is also possible for each cutter 1 to be mounted thereto by threadedly engaging a screw portion 3a of the cutter 1 with a screw hole 226 formed at the forward end of each of the first and second rotation shafts 213 and 215.

The above-described multiple plastic optical fiber end surface processing device operates as follows.

The first rotation shaft 213 is connected to the coupling 212 connected to the driving shaft 211 of the motor 210, so that it is rotated by being driven by the motor 210. The gear 216 of the first rotation shaft 213 and the gear 217 of the second rotation shaft 215 are in mesh with each other, so that, when the first rotation shaft 213 rotates, the second rotation shaft 215 also rotates. Since the holders 34 with the cutters 1 attached thereto are mounted by screws to the first and second rotation shafts 213 and 215, the holders 34 also rotate with the first and second rotation shafts 213 and 215, whereby the cutters 1 also rotate.

Thus, when the optical fiber 21 is inserted from the forward end side into the through-hole 35 of each holder 34 as indicated by the arrow in Fig. 16 and its end surface is brought into contact with the rotating cutter 1 with a small force, the end surface of the optical fiber 21 is cut into a predetermined configuration by the cutter 1. Since the holders 34 are arranged in parallel at this time, cutting can be simultaneously performed on the respective optical fibers by the respective cutters of the holders 34 even in the case of a multiple plastic optical fiber.

Accordingly, it is desirable that the number of holders 34 arranged in parallel be in correspondence with the number of optical fibers of the multiple plastic optical fiber and that the distance between the respective holders 34 be close to the distance between the optical fibers of the multiple plastic optical fiber.

By thus performing cutting inside the through-hole 35 of the holder 34 as described above, the optical fiber 21 is free from positional deviation, and the axes of the optical fiber 21 and the cutter 1 are matched with each other, whereby a desirable end surface processing is possible.

When cuttings (chips) are generated during the cutting of an optical fiber end surface, and they are likely to affect the accuracy of the cutting, it is also possible to provided in the portion of the holder 34 in the vicinity of the cutting edge 2 of the cutter 1 a window (hole) 36 as shown in Figs. 11 and 12A, thus discharging the chips through the window.

As described in detail above, the optical fiber end surface processing method, of the present invention provides the following advantages:
(1) A plastic optical fiber end surface can be cut not only into a convex semi-spherical surface but also into an arbitrary configuration, such as a concave semi-spherical surface or a flat surface, by changing the configuration of the cutter.
(2) Thus, it is possible to select an optimum optical fiber end surface configuration according to the mode of use. For example, it is possible to freely select between condensation of a quantity of light at a single point and diffusion thereof; further, in connecting optical fibers with each other, it is possible to mitigate the reduction (loss) in the quantity of light. Further, when one end surface of an optical fiber is cut into a concave configuration, and a spherical body formed of some other material is fitted into this concave portion, it is also possible to change the refractive index of the end surface.
(3) The end surface of a plastic optical fiber allows selective end surface processing not only of the core portion thereof but also of the cladding portion and the jacket thereof.
(4) Since cutting is performed with a cutter (cutting tool), there is no need for a heating means, a rapid cooling means, and the like as in the prior art, whereby it is possible to achieve simplification in construction and a reduction in cost, and the operation is easy to perform, so that anyone can perform end surface processing with ease.
(5) Even when the optical fiber to be processed is not a single-core optical fiber but a multiple plastic optical fiber, end surface cutting can be performed simultaneously on the respective optical fibers thereof by using a processing apparatus in which there are arranged in parallel holders to which cutters for cutting optical fiber end surfaces are attached. Thus, even in the case of a multiple plastic optical fiber, it is possible to perform end surface processing with high efficiency.
(6) Since the end surface of a plastic optical fiber is cut within a through-hole of a holder, the optical fiber is free from positional deviation, and cutting is possible with the axes of the optical fiber and the cutter matched with each other, whereby a desirable end surface processing is possible.
(7) The core portion, the cladding portion, and the jacket constituting an optical fiber and any connector attached thereto are formed of different materials. According to the present invention, however, appropriate end surface cutting is possible even on these components of different materials, thus making it possible to form an accurate end surface.

## Claims

1. A plastic optical fiber end surface processing method using a cutter (1) and a holder (34) having a through-hole (35), the cutter (1) having a blade-like shape corresponding to a shape into which an end surface of the plastic optical fiber is to be processed,
the method comprising steps of:
- inserting the end of the plastic optical fiber into the through-hole (35) from one side of the through-hole;
- inserting the cutter (1) half way into the through-hole (35) from another side of the through-hole so that the cutter faces the end surface of the plastic optical fiber;
- rotating the cutter (1);
- abutting said end surface of the plastic optical fiber in the through-hole (35) of the holder with the rotating cutter (1); and
cutting the end surface at least of the core portion (22) of the plastic optical fiber to form said shape.

2. A plastic optical fiber end surface processing method according to claim 1, **characterized in that** the cutter (1) has one of convex and concave semi-circular configurations.

3. A plastic optical fiber end surface processing method according to claim 1, **characterized in that** the holder (34) has a window (36) opened in the holder (34), for discharging chips.

## Patentansprüche

1. Endflächenbehandlungsverfahren für eine optische Kunststofffaser unter Verwendung einer Schneidvorrichtung (1) und eines Halters (34) mit einem Durchgangsloch (35), wobei die Schneidvorrichtung (1) eine klingenähnliche Form aufweist, die der Form entspricht, in die eine Endfläche der optischen Kunststofffaser gebracht werden soll, wobei das Verfahren folgende Schritte aufweist:
- Einführen des Endes der optischen Kunststofffaser in das Durchgangsloch (35) von einer Seite des Durchgangsloches her;
- Einführen der Schneidvorrichtung (1) zur Hälfte in das Durchgangsloch (35) von einer anderen Seite des Durchgangsloches her, so dass die Schneidvorrichtung der Endfläche der Kunststofffaser gegenübersteht;
- Drehen der Schneidvorrichtung (1);
- Auftreffen der Endfläche der Kunststofffaser in dem Durchgangsloch (35) des Halters auf die sich drehende Schneidvorrichtung (1); und
- Schneiden der Endoberfläche mindestens des Kernteils (22) der Kunstofffaser um die Form zu bilden.

2. Endflächenbehandlungsverfahren für eine optische Kunstofffaser nach Anspruch 1,
**dadurch gekennzeichnet, dass** die Schneidvorrichtung (1) eine konvexe und eine konkave halbkreisförmige Konfiguration aufweist.

3. Endflächenbehandlungsverfahren für eine optische Kunstofffaser nach Anspruch 1, **dadurch gekennzeichnet, dass** der Halter (34) ein Fenster (36) aufweist, das sich in dem Halter (34) öffnet, um Späne auszutragen.

## Revendications

1. Procédé de traitement de surface d'extrémité de fibre optique de plastique à l'aide d'un couteau (1) et d'un support (34) ayant un trou traversant (35), le couteau (1) ayant une forme de type lame correspondant à une forme dans laquelle une surface d'extrémité de la fibre optique de plastique doit être traitée, le procédé comprenant les étapes consistant à :
- introduire l'extrémité de la fibre optique de plastique dans le trou traversant (35) à partir d'un côté du trou traversant ;
- introduire le couteau (1) à mi-chemin dans le trou traversant (35) à partir d'un autre côté du trou traversant, de telle sorte que le couteau est dirigé vers la surface d'extrémité de la fibre optique de plastique ;
- faire tourner le couteau (1) ;
- amener ladite surface d'extrémité de la fibre optique de plastique dans le trou traversant (35) du support à être contiguë avec le couteau (1) en rotation ; et
- couper la surface d'extrémité d'au moins la partie de coeur (22) de la fibre optique de plastique pour former ladite forme.

2. Procédé de traitement de surface d'extrémité de fibre optique de plastique selon la revendication 1, **caractérisé par le fait que** le couteau (1) a l'une d'une configuration semi-circulaire convexe et d'une configuration semi-circulaire concave.

3. Procédé de traitement de surface d'extrémité de fibre optique de plastique selon la revendication 1, **caractérisé par le fait que** le support (34) a une fenêtre (36) ouverte dans le support (34), pour l'évacuation des copeaux.
